# EUROPEAN PATENT SPECIFICATION

(11) **EP 2 035 248 B1**
(45) Date of publication and mention of the grant of the patent: **18.08.2010**
(21) Application number: 06777582.5
(22) Date of filing: 05.07.2006
(51) Int. Cl.: B60K 23/08

(54) **METHOD OF AND A COMPUTER PROGRAMM FOR CONTROLLING A HYDRAULIC SYSTEM FOR AN ALL WHEEL DRIVE SYSTEM**
VERFAHREN UND COMPUTERPROGRAMMPRODUKT ZUM STEUERN EINER HYDRAULIKANLAGE FÜR EIN ALLRADANTRIEBSSYSTEM
PROCÉDÉ ET PRODUIT-PROGRAMME INFORMATIQUE POUR CONTRÔLER UN SYSTÈME HYDRAULIQUE POUR TRANSMISSION INTÉGRALE

(43) Date of publication of application: 18.03.2009
(73) Proprietor: Haldex Traction AB, 261 24 Landskrona (SE)
(72) Inventor: DAVIDSSON, Per-Olof, S-216 18 Limhamn (SE)
(74) Representative: Petri, Stellan
(86) International application number: PCT/EP2006/063890
(87) International publication number: WO 2008/003352

(56) References cited:
- EP-A- 1 527 938
- WO-A-2006/007086
- US-A1- 3 042 168
- US-A1- 2005 023 102

## Description

### Field of the Invention

The present invention relates to a method of controlling a hydraulic system for an all-wheel drive system for road and/or off-road vehicles. It also relates to a computer-readable medium with a program for performing the above method.

### Background of the Invention

Hydraulic systems for all-wheel drive applications in modern automotive vehicles are equipped with hydraulic components, for controlling and powering parts of the all-wheel drive system, such as wet clutches and differential brakes. Normal hydraulic components are a hydraulic pump and control valves, and the function of these components is very critical for the vehicle to behave in a safe manner. The all-wheel drive system is thus normalcy provided with safety features, for monitoring the system, such as pressure transducers, pressure switches, and position indicators. These sensors are very costly, however, and increase the total cost of the system significantly. Such a hydraulic system as well as a method for controlling the same, is known from US 2005 023102.

### Summary of the Invention

It is an object of the present invention to provide a method of controlling a hydraulic system for all-wheel drive applications that is as safe as previous methods but which allows for the cheaper manufacture of the system since it may contain fewer parts. This is achieved by a method according to claim 1, i. e. a method of monitoring and controlling the hydraulic system of the vehicle, where the fill-ratio of an accumulator is estimated by using readily available control signals. The positive flow to the accumulator is estimated by monitoring the supply voltage and current to the hydraulic pump. The negative flow from the accumulator is estimated from the control signal from an electronic control unit (ECU) to a control valve (work flow) and from predetermined leakage flow through valves, which e.g. depends on the hydraulic pressure in the system. The fill-ratio of the accumulator is estimated as the sum of the above positive and negative flows.

A reference value of the fluid level in the accumulator can be obtained by monitoring the pump current, which changes markedly when the accumulator is full.

The accumulator may be fitted with an overflow valve, which opens when the accumulator is full, in order to more easily detect a change in the pump current when the accumulator is full.

### Brief Description of the Drawings

The all-wheel drive system according to the invention is more easily understood by reading the below detailed description with references to the drawings, in which
Fig. 1 is a schematical view of a typical hydraulic circuit for an all-wheel drive system,
Fig. 2 is a flowchart showing the method steps for controlling the hydraulic circuit according to the invention, and
Fig. 3 is a graph showing the electric hydraulic pump drive current as a function of volume in the accumulator, for different designs of the accumulator.

### Detailed Description of the Invention

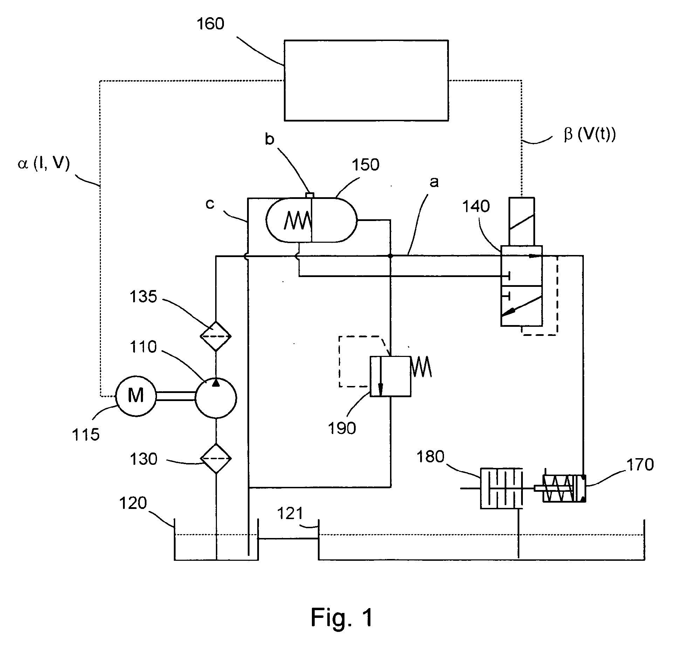

The present invention relates to a method for controlling a hydraulic system 100 for an all-wheel drive system, which uses a control method for operating electric hydraulic pump. The hydraulic system as shown in Fig. 1 comprises a relatively small hydraulic pump **110,** which is driven by an electric motor **115.** The pump draws hydraulic fluid from a reservoir **120** through a sieve **130** and then delivers pressurized hydraulic fluid to a valve **140,** such as a pulse-width modulated (PWM) valve, via a filter **135.** A channel **a** leading from the pump **110** to the valve **140** is connected to an accumulator **150,** which accommodates a portion of the pressurized hydraulic fluid. The valve **140** may be controlled by an electronic control unit (ECU) **160,** which can receive signals from an associated vehicle, such as vehicle speed, vehicle acceleration, fluid temperatures etc. The valve **140** may direct fluid to a hydraulic cylinder **170,** which when supplied pressurized fluid can compress a clutch **180** that can be coupled to a piston of the hydraulic cylinder **170.** The system **100** can further be equipped with a pressure relief valve **190** that can be connected between the line **a** and the reservoir **120.** The pressure relief valve **190** may drain off fluid to the reservoir **120,** when the pressure in channel **a** exceeds a certain predetermined pressure. The hydraulic pump **110** or the channel **a** may be provided with a check valve (not shown), for maintaining the high pressure in the channel **a** and the accumulator **150.** This functionality may also be built into the hydraulic pump **110,** or be given by its design.

The accumulator **150** may be equipped with an overflow valve, shown as the channel **b** in Fig. 1. When the fluid pressure inside the accumulator is sufficiently high, a piston of the accumulator **150** will be pushed past an opening, e.g. in the accumulator wall, which puts channel **b** in fluid communication between the high-pressure side and the low-pressure side of the accumulator **150,** on the other side of the piston. Some hydraulic fluid will flow throw this channel **b,** until the pressure has dropped and the piston closes off the channel **b.** The fluid that has leaked to the low-pressure side of the accumulator **150** will be directed to the reservoir **120** via a spillway overflow valve and a line c. The overflow valve thus more or less functions as a pressure relief valve, but is more useful than the standard pressure relief valve **190,** as the overflow valve indicates when the accumulator is full. The standard pressure relief valve **190** is still useful, though, since it can protect the hydraulic system if the overflow channel **b** malfunctions, such as if the accumulator piston gets stuck.

The drain from the control valve **140** is connected to a low-pressure side of the accumulator **150.** This is a special feature, which is used for minimizing the change of the fluid level in the reservoir **120.** The accumulator is hence always almost full, with hydraulic fluid on both sides or on either side of the piston.

The system **100** may also be provided with an additional valve (not shown) for operating a second hydraulic cylinder coupled to a second actuator (both not shown), e.g. a differential brake. The differential brake may be used for bypassing a differential which otherwise would not transfer any torque to a slipping wheel associated with an axle coupled to the differential. The differential brake may be coupled to a hydraulic cylinder that may be similar to the hydraulic cylinder. Additional components could also be incorporated into the system, as is well known for a person skilled in the art.

The ECU **160** of the all-wheel drive system is configured to send control signals to the electric hydraulic pump **110** and to the control valve **140** and may also receive signals from sensors, which are optionally arranged in the system, if desired. The ECU **160** may also be arranged to measure or estimate the control signals, such as drive currents and voltages that e.g. are sent to the electric hydraulic pump **110** and/or the PWM valve **140.** The ECU **160** is hence configured to control the electric motor **115** of the electric hydraulic pump **110** by estimating the fill rate of the accumulator **150,** through gathered system information as is explained in more detail below.

The valve **140** may e.g. be a solenoid controlled pressure control valve or a pressure-reducing valve. The clutch **180** and the differential brake may e.g. be wet clutches comprising several separate, axially movable disks, as is well known in the art, or other types that are typical within the art.

During operation of the hydraulic system **100,** the ECU **160** sends a control signal α to the pump **110,** which draws hydraulic fluid from the reservoir **120** and pressurizes the fluid in channel **a.** The accumulator **150,** connected to channel **a,** is supplied pressurized fluid up to the maximum pressure, when the pressure relief valve **190** is opened, or up to the maximum volume of the accumulator, when the channel **b** is brought into communication with the reservoir **120.** The pump **110** may then be shut off, until the fluid pressure reaches a lower level or the accumulator level is low, e.g. as given by an estimation of the negative flow from the accumulator, and the pump **110** is started anew.

The control valve **140** may be opened by an appropriate control signal β from the ECU **160.** The valve **140** then directs fluid at a certain pressure to the hydraulic cylinder **170** and the clutch **180** is subsequently compressed at least partly. The compression of the clutch **180** makes it possible to transfer torque from a drive shaft to a driven shaft of the vehicle, or to lock-up a differential. When the control valve **140** is closed, the pressurized fluid is drained from the hydraulic cylinder **170** to the reservoir **120,** e.g. via the low-pressure side of the accumulator **150** as seen in Fig. 1. The same principle applies if a second valve, a second hydraulic cylinder and a differential brake also are installed in the system.

The accumulator **150** operates as a buffer and makes it possible to deliver high-pressure fluid at a high rate, without initially involving the pump **110.** The pump **110** intermittently supplies the accumulator **150** with pressurized fluid and the pump **110** can thus be dimensioned for an average oil supply, since the peak demand will be supplied by the accumulator **150.** The pump **110** is thus driven by the average demand, and this can be determined in different ways, e.g. by monitoring the control signals to the PWM valve **140** and by having predetermined tables of leakage through the various components of the hydraulic system.

The hydraulic system **100** for an all-wheel system according to the invention is designed for minimizing the need for sensors and other monitoring equipment to reduce the overall cost of the system. In order to maintain the reliability of the system, a few control features are necessary, and these are given below.

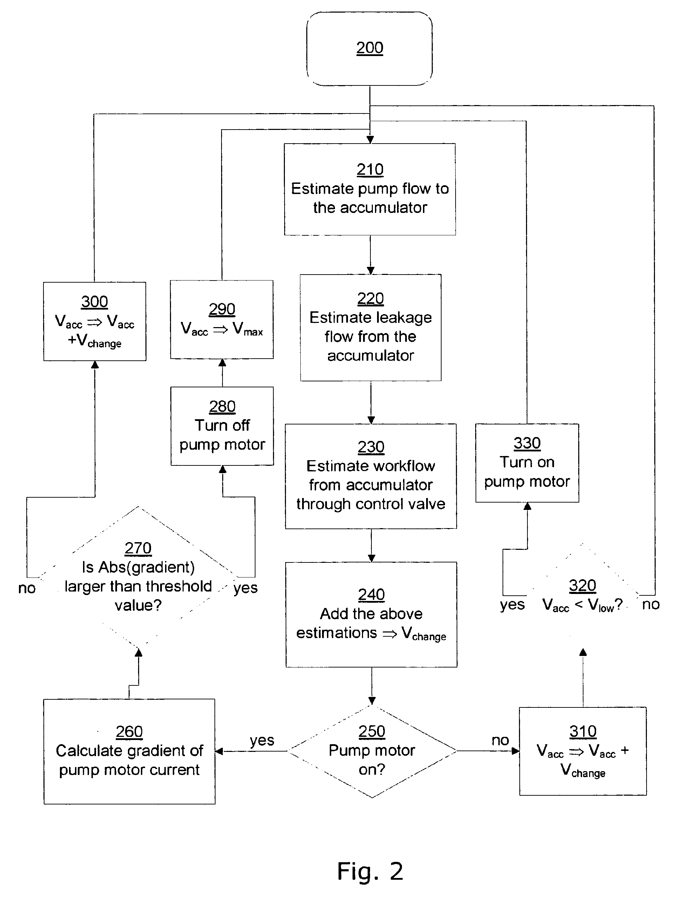

In present invention, a method applicable to the above-mentioned system is provided, which is suitable for detection of the fill rate of the accumulator **150.** The method comprises the following steps, which can be seen in Fig. 2:
210: estimating the oil flow from the oil pump to the accumulator, e.g. given by measurements of current and/or voltage to the electric hydraulic pump **110,**
220: estimating nominal system leakage from the accumulator through the control valve 140, the pump 110 etc., e.g. as a predetermined worst-case value, which depends on the hydraulic pressure,
230: estimating hydraulic-fluid work flow from the accumulator through the at least one control valve **140,** which e.g. depends on the hydraulic pressure and the elasticity of the coupling **100.**

The sum of the above-obtained estimations gives the volume change in the accumulator **150,** and this is performed in step 140. If the pump motor is on, the accumulator is being filled. The gradient of the pump motor is calculated in step 260. If the size of this value, Abs(gradient), is above a certain threshold value, the pump motor is turned off since the accumulator is full, as given in step 280. The volume of the accumulator is now the maximum volume, Vmax, as given in step 290. If the accumulator is not full, i.e. the gradient is below a threshold value, the volume in the accumulator is increased in step 300 with the volume change as calculated in step 240. The control method is now repeated by going back to step 210.

If the pump motor is off, the volume of the accumulator is increased with the volume change V_{change} (which in this case is negative), as seen in step 310. If the calculated volume V_{acc} is below a predetermined value V_{low,} the pump is turned on so that the accumulator can be refilled, in step 330. If the accumulator volume is not below said value, V_{low}, do nothing. The sequence is repeated by going back to step 210. The algorithm may be performed in the ECU at a suitable frequency, such as 100 Hz.

For safety reasons, a worst-case leakage flow is optionally used in the algorithm, since this minimizes the risk of emptying the accumulator. This may, however, increase the running frequency of the pump **110,** in order to fill the accumulator **150** that is presumed almost empty.

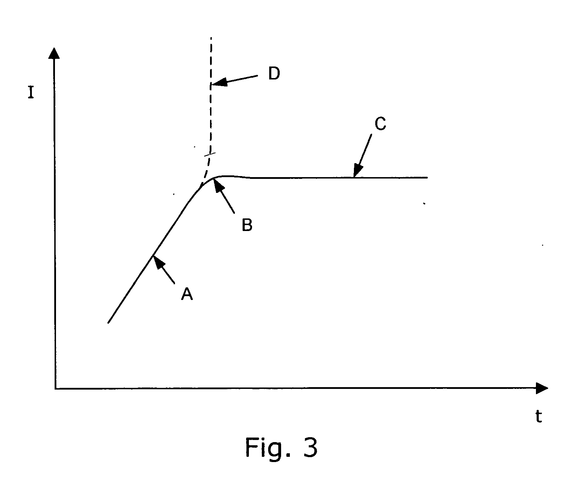

The pump current is monitored, as this is a measure of the load of the pump **110.** This drive current of the motor **115** of the electric pump **110** increases with increasing counter-pressure of the pump, see Fig. 3. When the accumulator fills up, the counter-pressure increases, see at A in Fig. 3, until the overflow channel **b** of the accumulator **150** opens, see at B in Fig. 3. This indicates that the accumulator is full. The overflow leads to a levelling out of the pressure and the drive current of the electric pump hence levels out (see at C in Fig. 3). By monitoring the tangential variations of the electric pump motor current, e.g. by means of an ECU, it is possible to observe when the accumulator is full. If the accumulator is not equipped with an overflow channel **b,** the piston of the accumulator will reach an end position, and the hydraulic system will become incompressible, rigid. This can also be observed in the drive current of the electric pump 110, but now as a marked increase as can be seen at D in Fig. 3.

The pump voltage is also monitored and this corresponds to the rotational speed of the electric motor **115** and hence the rotational speed of the hydraulic pump **110.** The pump flow can hence be estimated by measuring the pump voltage and the pump current and using predetermined models.

The leakage flow through the control valve 140, the pump 110 etc. may be estimated as a simple time dependent flow, but it actually also depends on the fluid pressure in the high-pressure side of the system. The fluid pressure may be estimated by the pump current, as given above, and this is thus used for making more precise predictions of the leakage flow.

By using more of the control signals, the estimation of the fill-rate of the accumulator **150** becomes more and more precise.

The present invention also relates to a computer-readable medium having embodied thereon a computer program for performing the method of the invention, in which case the method steps are represented by code segments.

The method according to the invention will be carried out in a hydraulic system as described above and which is shown in Fig. 1. The heart of the hydraulic system is the accumulator that allows for rapid delivery of high-pressure hydraulic fluid to the control valve(s) of the system. A small pump can be used, since it only has to replenish the accumulator occasionally, and does not have to be sized for the maximum flow in the system.

It is beneficial, though, to minimize the consumption of hydraulic oil in the system since this otherwise leads to frequent running of the hydraulic pump and high energy consumption of the overall system. One way of improving the efficiency of the system is to minimize the flow that is needed to pressurize the hydraulic cylinder. This flow depends on the stroke of the hydraulic cylinder and the elasticity of the system. By designing the hydraulic cylinder for a minimal stroke (volume wise), the only remaining parameter is the elasticity of the system. This depends on the flexibility of the system housing and bolts, on the compressibility of the hydraulic oil, due to therein dissolved or entrained gas, on the compressibility of the sealings and on the compressibility of the clutch disks in the clutch. The last factor, the clutch disks, contributes greatly to the overall elasticity of the system, so this should be minimised.

This can be done by using specific rigid coatings on steel disks, having a coefficient of compressibility that is very low, such as sinter bronze. Such disks, called sintered clutch disks or plates, comprise a steel base and are coated with the sintered coating. Coatings having a similar compressibility are also suitable. The disks can also be formed from one material, having all the features of the steel carrier and the friction material, and also having a low compressibility. The sinter bronze can be CuSn₁₀ or similar composition, which means that about 8-12% of the bronze is tin, about 88-92% copper and other elements can be present in small contents, such as iron, lead, carbon.

## Claims

1. A method of controlling a hydraulic system (100) for an all-wheel drive system, said hydraulic system comprising an electric hydraulic pump (110), a control valve (140) for directing hydraulic fluid to a load, and an accumulator (150) in fluid communication with the pump (110) and the valve (140), said method comprising the steps of
estimating a negative hydraulic-fluid leakage flow out of the accumulator (150), such as through the valve (140) and the pump (110), using a predetermined model,
estimating a negative hydraulic-fluid work flow through the valve (140), by studying the control signal from an ECU (170) to the control valve (140) and using a predetermined model,
estimating a first positive fluid flow from the pump (110) into the accumulator (150), from a control signal from the ECU (170), and
adding the above estimated negative hydraulic-fluid leakage flow, negative hydraulic-fluid work flow and positive fluid flow to a total flow communicating with the accumulator (150), and
obtaining a value of the volume of the hydraulic fluid in the accumulator (150) from said total flow communicating with the accumulator (150) for controlling an operation mode of said pump (110).

2. A method according to claim 1, wherein the hydraulic-fluid pressure downstream of the pump (110) is estimated by measuring the electric current supplied to said pump (110) and using table lookup in a table of pump current vs. hydraulic-fluid pressure.

3. A method according to claim 2, wherein the leakage flow through the hydraulic components (110, 140, 170) is calculated from estimated values of the fluid pressure in the high-pressure side of the hydraulic system.

4. A method according to any previous claim, wherein the positive fluid flow from the pump (110) is estimated by measuring the pump (110) voltage and/or current from the ECU (170) and using predetermined data on pump performance.

5. A method according to any previous claim, wherein a pump current, for driving the electric hydraulic pump (110), is analyzed in order to detect a marked change in said pump current, which occurs when the pump (110) is pumping to a full accumulator (150).

6. A method according to claim 5, wherein a reference value of the fluid volume in the accumulator is set to the maximum volume, when the pump current indicates that the accumulator (150) is full.

7. A method according to claim 5 or 6, wherein the marked change is a levelling-off of the pump current, as a piston of the accumulator (150) has passed a spillway overflow channel (b) that is incorporated into the accumulator (150).

8. A method according to claim 5 or 6, wherein the marked change is a rapid increase of the pump current, due to the accumulator (150) being full leading to an incompressible system and increased load of the pump (110).

9. A method according to any previous claim, wherein an "on"-signal is sent to the pump (110) based on the above hydraulic-fluid volume change value, when a predetermined low threshold value has been reached.

10. A method according to any previous claim, wherein the hydraulic-fluid work flow through the at least one valve (140) is estimated based on estimated hydraulic pressure and predetermined tables of system elasticity.

11. A computer-readable medium having embodied thereon a computer program for processing by a computer for controlling a hydraulic system (100) for an all-wheel drive system, said hydraulic system comprising an electric hydraulic pump (110), a control valve (140) for directing hydraulic fluid to a load, such as a hydraulic actuator (170), and an accumulator (150) in fluid communication with the pump (110) and the valve (140), said program comprising
a first code segment for estimating a negative hydraulic-fluid leakage flow out of the accumulator (150), such as through the valve (140) and the pump (110), using a predetermined model,
a second code segment for estimating a negative hydraulic-fluid work flow through the valve (140), by studying the control signal from an ECU (170), comprising said computer, to the control valve (140) and using a predetermined model,
a third code segment for estimating a first positive fluid flow from the pump (110) into the accumulator (150), from a control signal from the ECU (170), and
a fourth code segment for adding the above estimated negative hydraulic-fluid leakage flow, negative hydraulic-fluid work flow and positive fluid flow to a total flow communicating with the accumulator (150), and
a fifth code segment for obtaining a value of the volume of the hydraulic fluid in the accumulator (150) from said total flow communicating with the accumulator (150) for controlling an operation mode of said pump (110).

12. A computer program adapted to carry out the method according to claims 1-10.

## Patentansprüche

1. Ein Verfahren zur Steuerung eines hydraulischen Systems (100) für ein Allrad-Antriebssystem, wobei das Hydrauliksystem eine elektrische Hydraulikpumpe (110), ein Steuerventil (140), um ein Hydraulikfluid auf eine Last zu richten, und einen Akkumulator (150), welcher in Fluidverbindung mit der Pumpe (110) und dem Ventil (140) steht, umfasst, wobei das Verfahren die Schritte aufweist, dass
ein negativer Leckagestrom des Hydraulikfluids aus dem Akkumulator (150), beispielsweise durch das Ventil (140) und die Pumpe (110), unter Verwendung eines vorbestimmten Models geschätzt wird,
ein negativer Arbeitsfluss des Hydraulikfluids durch das Ventil (140) geschätzt wird, indem das Kontrollsignal von einer ECU (170) an das Steuerventil (140) untersucht und ein vorbestimmtes Modell verwendet wird,
ein erster positiver Fluidstrom von der Pumpe (110) in den Akkumulator (150) mittels eines Kontrollsignals der ECU (170) geschätzt wird, und
der obige geschätzte negative Leckagestrom des Hydraulikfluids, der negative Arbeitsfluss des Hydraulikfluids und der positive Fluidstrom zu einem Gesamtfluss, der in Verbindung mit dem Akkumulator (150) steht, addiert wird, und
ein Wert für das Volumen des Hydraulikfluids in dem Akkumulator (150) aus dem Gesamtfluss, der in Verbindung mit dem Akkumulator (150) steht, erhalten wird, um einen Betriebsmodus der Pumpe (110) zu steuern.

2. Ein Verfahren nach Anspruch 1, **dadurch gekennzeichnet, dass** der Hydraulikfluiddruck stromabwärts der Pumpe (110) durch Messung des der Pumpe (110) zugeführten elektrischen Stroms und unter Verwendung von Nachschlagetabellen für den Pumpenstrom im Verhältnis zum Hydraulikfluiddruck geschätzt wird.

3. Ein Verfahren nach Anspruch 2, **dadurch gekennzeichnet, dass** der durch die Hydraulikkomponenten (110, 140, 170) verursachte Leckagestrom aus geschätzten Werten der Fluiddrücke auf der Hochdruckseite des Hydrauliksystems berechnet wird.

4. Ein Verfahren nach einem der vorhergehenden Ansprüche, **dadurch gekennzeichnet, dass** der positive Fluidstrom von der Pumpe (110) durch Messung der Spannung und/oder der Stromstärke der Pumpe (110) von der ECU (170) und unter Verwendung vorgegebener Pumpenleistungsdaten geschätzt wird.

5. Ein Verfahren nach einem der vorhergehenden Ansprüche, **dadurch gekennzeichnet, dass** ein Pumpenstrom, der die elektrische Hydraulikpumpe (110) antreibt, analysiert wird, um eine deutliche Veränderung des Pumpenstroms zu erkennen, die entsteht, wenn die Pumpe (110) in einen vollen Akkumulator (150) pumpt.

6. Ein Verfahren nach Anspruch 5, **dadurch gekennzeichnet, dass** ein Referenzwert des Fluidvolumens in dem Akkumulator auf das Maximalvolumen gesetzt wird, wenn der Pumpenstrom anzeigt, dass der Akkumulator (150) voll ist.

7. Ein Verfahren nach Anspruch 5 oder 6, **dadurch gekennzeichnet, dass** die deutliche Veränderung ein Abflachen des Pumpenstroms ist, weil ein Kolben des Akkumulators (150) einen Überlaufkanal (b) freigibt, der im Akkumulator (150) integriert ist.

8. Ein Verfahren nach Anspruch 5 oder 6, **dadurch gekennzeichnet, dass** die deutliche Veränderung ein schneller Anstieg des Pumpenstroms ist, weil der Akkumulator (150) aufgrund eines inkompressiblen Systems voll ist und die Pumpe (110) eine erhöhte Last hat.

9. Ein Verfahren nach einem der vorhergehenden Ansprüche, **dadurch gekennzeichnet, dass** ein "on"-Signal basierend auf dem obigen Veränderungswert des Hydraulikfluidvolumens an die Pumpe (110) gesendet wird, wenn ein vorbestimmter Niedrigpegel-Schwellenwert erreicht ist.

10. Ein Verfahren nach einem der vorhergehenden Ansprüche, **dadurch gekennzeichnet, dass** der Arbeitsfluss des Hydraulikfluids durch das mindestens eine Ventil (140) basierend auf geschätzten Hydraulikdrücken und vorgegebenen Tabellen für Systemelastizität geschätzt wird.

11. Ein maschinenlesbares Medium, wobei sich auf dem Medium ein Computerprogramm zur Ausführung mit einem Computer befindet, um ein Hydrauliksystem (100) für ein Allrad-Antriebssystem zu steuern, wobei das Hydrauliksystem eine elektrische Hydraulikpumpe (110), ein Steuerventil (140), um ein Hydraulikfluid auf eine Last, wie beispielsweise ein hydraulisches Stellglied (170), zu richten, und einen Akkumulator (150), welcher in Fluidverbindung mit der Pumpe (110) und dem Ventil (140) steht, umfasst, wobei das Programm
ein erstes Codesegment zum Schätzen eines negativen Leckagestroms des Hydraulikfluids aus dem Akkumulator (150), beispielsweise durch das Ventil (140) und die Pumpe (110) unter Verwendung eines vorbestimmten Modells,
ein zweites Codesegment zum Schätzen eines negativen Arbeitsflusses des Hydraulikfluids durch das Ventil (140), indem das Kontrollsignal von einer ECU (170), die den Computer umfasst, an das Steuerventil (140) untersucht und ein vorbestimmtes Modell verwendet wird,
ein drittes Codesegment zum Schätzen eines ersten positiven Fluidstroms von der Pumpe (110) in den Akkumulator (150) mittels eines Kontrollsignals der ECU (170), und
ein viertes Codesegment zum Addieren des obigen geschätzten negativen Leckstroms des Hydraulikfluids, des negativen Arbeitsflusses des Hydraulikfluids und des positiven Fluidstroms zu einem Gesamtfluss, der in Verbindung mit dem Akkumulator (150) steht, und
ein fünftes Codesegment zum Erhalten eines Wertes für das Volumen des Hydraulikfluids in dem Akkumulator (150) aus dem Gesamtfluss, der in Verbindung mit dem Akkumulator (150) steht, zur Steuerung eines Betriebsmodus einer Pumpe (110), aufweist.

12. Ein Computerprogramm, das geeignet ist, das Verfahren nach den Ansprüchen 1 bis 10 auszuführen.

## Revendications

1. Procédé de commande d'un système hydraulique (100) pour un système pour transmission intégrale, ledit système hydraulique comprenant une pompe (110) hydraulique électrique, une soupape de commande (140), pour diriger du fluide hydraulique vers une charge, et un accumulateur (150), en communication fluidique avec la pompe (110) et la soupape (140), ledit procédé comprenant les étapes consistant à :
estimer un écoulement de fuite négatif de fluide hydraulique hors de l'accumulateur (150), tel que se produisant à travers la soupape (140) et la pompe (110), en utilisant un modèle prédéterminé,
estimer un écoulement de travail négatif de fluide hydraulique, tel que se produisant à travers la soupape (140), en étudiant le signal de commande émanant d'une ECU (170) et allant à la soupape de commande (140), et en utilisant un modèle prédéterminé,
estimer un premier écoulement de fluide positif, se faisant de la pompe (110) jusque dans l'accumulateur (150), à partir d'un signal de commande émanant de l'ECU (170), et
additionner l'écoulement de fuite négatif de fluide hydraulique estimé précédemment, l'écoulement de travail négatif de fluide hydraulique et l'écoulement de fluide positif pour obtenir un écoulement total communiquant avec l'accumulateur (150), et
obtenir une valeur du volume du fluide hydraulique présent dans l'accumulateur (150), à partir dudit écoulement total communiquant avec l'accumulateur (150), pour commander un mode de fonctionnement de ladite pompe (110).

2. Procédé selon la revendication 1, dans lequel la pression de fluide hydraulique, en aval de la pompe (110) est estimée en mesurant le courant électrique fourni à ladite pompe (110) et en utilisant une consultation d'une table de correspondance représentant le courant de pompe par rapport à la pression de fluide hydraulique.

3. Procédé selon la revendication 2, dans lequel l'écoulement de fuite s'effectuant à travers les composants hydrauliques (110, 140, 170) est calculé à partir de valeurs estimées de la pression de fluide du côté haute pression du système hydraulique.

4. Procédé selon l'une quelconque des revendications précédentes, dans lequel l'écoulement de fluide positif provenant de la pompe (110) est estimé en mesurant de la tension et/ou de l'intensité de pompe (110) à partir de l'ECU (170) et en utilisant des données prédéterminées concernant les performances de la pompe.

5. Procédé selon l'une quelconque des revendications précédentes, dans lequel un courant de pompe, servant à l'entraînement de la pompe (110) hydraulique électrique, est analysé de manière à détecter un changement marqué dudit courant de pompe, se produisant lorsque la pompe (110) opère un pompage vers un accumulateur (150) plein.

6. Procédé selon la revendication 5, dans lequel une valeur de référence du volume de fluide présent dans l'accumulateur est fixée au volume maximal, lorsque le courant de pompe indique que l'accumulateur (150) est plein.

7. Procédé selon la revendication 5 ou 6, dans lequel le changement marqué est une stabilisation du courant de pompe, lorsqu'un piston de l'accumulateur (150) a franchi un canal d'évacuation de débordement (b) incorporé dans l'accumulateur (150).

8. Procédé selon la revendication 5 ou 6, dans lequel le changement marqué est une augmentation rapide du courant de pompe, imputable au fait que l'accumulateur (150) est plein, menant à une incompressibilité du système et à une augmentation de la charge de la pompe (10).

9. Procédé selon l'une quelconque des revendications précédentes, dans lequel le signal "en service" est envoyé à la pompe (110) d'après la valeur de changement de volume de fluide hydraulique ci-dessus, lorsqu'une valeur seuil basse prédéterminée a été atteinte.

10. Procédé selon l'une quelconque des revendications précédentes, dans lequel l'écoulement de travail de fluide hydraulique se faisant à travers la au moins une soupape (140) est estimé d'après la pression hydraulique estimée et des tables prédéterminées d'élasticité du système.

11. Support lisible par ordinateur, incorporant un programme informatique pour traitement par un ordinateur, pour commander un système hydraulique (100) pour un système pour transmission intégrale, ledit système hydraulique comprenant une pompe (110) hydraulique électrique, une soupape de commande (140), pour diriger du fluide hydraulique vers une charge, telle qu'un actionneur hydraulique (170), et un accumulateur (150), en communication fluidique avec la pompe (110) et la soupape (140), ledit programme comprenant :
un premier segment de code, pour estimer un écoulement de fuite négatif de fluide hydraulique hors de l'accumulateur (150), tel que se produisant à travers la soupape (140) et la pompe (110), en utilisant un modèle prédéterminé,
un deuxième segment de code, pour estimer un écoulement de travail négatif de fluide hydraulique, tel que se produisant à travers la soupape (140), en étudiant le signal de commande émanant d'une ECU (170), comprenant ledit ordinateur, et allant à la soupape de commande (140), et en utilisant un modèle prédéterminé,
un troisième segment de code, pour estimer un premier écoulement de fluide positif, se faisant de la pompe (110) jusque dans l'accumulateur (150), à partir d'un signal de commande émanant de l'ECU (170), et
un quatrième segment de code, pour additionner l'écoulement de fuite négatif de fluide hydraulique estimé précédemment, l'écoulement de travail négatif de fluide hydraulique et l'écoulement de fluide positif pour obtenir un écoulement total communiquant avec l'accumulateur (150), et
un cinquième segment de code, pour obtenir une valeur du volume du fluide hydraulique présent dans l'accumulateur (150), à partir dudit écoulement total communiquant avec l'accumulateur (150), pour commander un mode de fonctionnement de ladite pompe (110).

12. Programme informatique, destiné à la mise en oeuvre du procédé selon les revendications 1 à 10.
